# EUROPEAN PATENT APPLICATION

(11) **EP 4 799 890 A1**
(43) Date of publication of application: **02.09.2026**
(21) Application number: 26159397.4
(22) Date of filing: 18.02.2026
(51) Int. Cl.: B60W 40/114, B60W 10/06, B60W 10/184, B60W 10/188

(54) **METHOD, APPARATUS, AND SYSTEM FOR VEHICLE CONTROL**

(30) Priority: 27.02.2025 CN 202510229023
(71) Applicant: Volvo Car Corporation, 405 31 Göteborg (SE)
(72) Inventor: XU, Wentao, SHANGHAI, 201815 (CN); YU, Hongchao, SHANGHAI, 201815 (CN); LIN, Zhisheng, SHANGHAI, 201815 (CN)
(74) Representative: Kransell & Wennborg KB

(57) **Abstract**

The present disclosure relates to a method applied to vehicle control, including: determining a current driving state of a vehicle, the current driving state being associated with an acceleration operation or a deceleration operation of the vehicle; obtaining a plurality of sample values of a non-steer wheel cornering stiffness of the vehicle in the current driving state; and determining a reference value of the non-steer wheel cornering stiffness corresponding to the current driving state based on the plurality of sample values of the non-steer wheel cornering stiffness.

## Description

### TECHNICAL FIELD

The present disclosure relates to the field of vehicle control, and more particularly to a method, an apparatus, and a system applied to vehicle control.

### BACKGROUND

With the rapid development of vehicle technology and the increasing complexity of road conditions, vehicle handling and stability have become important considerations in vehicle design and manufacturing. In order to achieve safe and stable driving of the vehicle, dynamic parameters of the vehicle are typically tracked by chassis actuators of the vehicle to achieve the dynamic control of the vehicle. Therefore, the accuracy of the vehicle's dynamic parameters is particularly important for vehicle control.

However, there are limitations in the calculation and application of vehicle dynamic parameters in the existing technology. For example, wheel cornering stiffness describes the deformation degree of the tire or wheel axle under lateral force, and is one of the key parameters affecting steering maneuverability and stability. When controlling the vehicle, the existing methods often adopt a fixed cornering stiffness value, and ignore the change of cornering stiffness under different driving conditions. Therefore, control methods based on fixed cornering stiffness values may result in less than optimal operating response and riding experience during actual driving of the vehicle.

### SUMMARY

In order to solve the above problems, the present disclosure proposes an improved vehicle control technique for dynamically determining the non-steer wheel cornering stiffness of the vehicle in different driving states for control of the vehicle in the corresponding driving states.

According to an aspect of the present disclosure, there is provided a computer-implemented method applied to vehicle control, including: determining a current driving state of the vehicle, the current driving state being associated with an acceleration operation or a deceleration operation of the vehicle; obtaining a plurality of sample values of a non-steer wheel cornering stiffness of the vehicle in the current driving state; and determining a reference value of the non-steer wheel cornering stiffness corresponding to the current driving state based on the determined plurality of sample values of the non-steer wheel cornering stiffness.

According to an embodiment of the present disclosure, the above method further includes: determining whether the vehicle satisfies a sampling condition; and in response to the vehicle satisfying the sampling condition, obtaining a plurality of sample values of a non-steer wheel cornering stiffness of the vehicle in the current driving state until it is determined that the vehicle does not satisfy the sampling condition; for example, the sampling condition indicates that the vehicle is in a smooth traveling state, and the sampling condition may include: lateral acceleration of the vehicle is within a predetermined range, yaw angle acceleration is less than a predetermined value, turning radius is greater than a predetermined value, steering angle of a steer wheel is less than a predetermined value, lateral force of a steer wheel is less than a predetermined value; and/or the sampling condition indicates that the vehicle is in a non-control intervention state, the sampling condition comprising one or more of an anti-lock braking system, a traction control system and an active yaw control system not being activated.

According to an embodiment of the present disclosure, the above method further includes: determining a sampling period for obtaining a plurality of sample values of the non-steer wheel cornering stiffness; and ceasing to obtain a plurality of sample values of the non-steer wheel cornering stiffness in response to the sampling period reaching a predetermined time threshold.

According to an embodiment of the present disclosure, wherein the determining the current driving state of the vehicle includes determining whether the current driving state is a first driving state associated with an acceleration operation of the vehicle based on an engine torque of the vehicle, the acceleration operation including: stepping on an accelerator pedal; and determining, based on a main brake cylinder pressure of the vehicle, whether the current drive state is a second drive state associated with a deceleration operation of the vehicle, the deceleration operation including: stepping a brake pedal or releasing an accelerator pedal.

According to an embodiment of the present disclosure, wherein the obtaining of the plurality of sample values of the non-steer wheel cornering stiffness of the vehicle in the current driving state includes: calculating a plurality of instantaneous values of a lateral velocity of the vehicle in the current driving state based on a dynamic model of the vehicle; and calculating a plurality of sample values of the non-steer wheel cornering stiffness corresponding to the plurality of lateral velocities based on the calculated plurality of instantaneous values of lateral velocity. For example, the steer wheel is the front wheel of the vehicle, and the non-steer wheel is the rear wheel of the vehicle. The expression of the dynamic model is as follows:
$\left[\begin{matrix}\dot{ν} \\ \dot{r}\end{matrix}\right] = \left[\begin{matrix}- \frac{{C}_{f} + {C}_{r}}{mu} & \frac{{bC}_{r} - {aC}_{f}}{{m}_{1} u} - u \\ \frac{{bC}_{r} - {aC}_{f}}{Iu} & - \frac{{a}^{2} {C}_{f} + {b}^{2} {C}_{r}}{Iu}\end{matrix}\right] \left[\begin{matrix}ν \\ r\end{matrix}\right] + \left[\begin{matrix}\frac{{C}_{f}}{m} \\ \frac{{aC}_{f}}{I}\end{matrix}\right] δ$
Where *v* is the lateral velocity of the vehicle; *r* is the yaw angle rate of the vehicle; *v̇* and *ṙ* are derivatives of *v* and *r* with respect to time, respectively; *u* is the longitudinal velocity of the vehicle; *I* is the yaw moment of inertia; *δ* is the steering angle of the steer wheel; *m* is the mass of the vehicle; *a* and b are the distances of the front and rear axles to the center of gravity of the vehicle, respectively; and *C*_{f} and *C*ᵣ are the cornering stiffness of the front and rear wheels of the vehicle, respectively; and calculating a plurality of sample values of the non-steer wheel cornering stiffness comprises: calculating a plurality of instantaneous values of said lateral velocity using a front wheel cornering stiffness; and calculating a sample value of the non-steer wheel cornering stiffness corresponding to each of the plurality of lateral velocities, respectively, using the calculated plurality of instantaneous values of the lateral velocities.

According to an embodiment of the present disclosure, wherein the determining the reference value of the non-steer wheel cornering stiffness corresponding to the current driving state includes: in response to all the sample values of the non-steer wheel cornering stiffness in the current driving state are obtained, averaging all the obtained sample values, to obtain an average value of the non-steer wheel cornering stiffness; and determining an average value of the non-steer wheel cornering stiffness as a reference value of the non-steer wheel cornering stiffness.

According to an embodiment of the present disclosure, the above method further includes: controlling the operation of the non-steer wheel of the vehicle in the current driving state based on a reference value of the non-steer wheel cornering stiffness corresponding to the current driving state.

According to an embodiment of the present disclosure, wherein the operation of controlling the non-steer wheel of the vehicle in the current driving state includes: calculating a reference value of yaw angle rate corresponding to the current driving state based on a reference value of the non-steer wheel cornering stiffness; and controlling non-steer wheel of the vehicle to track the calculated reference value of the yaw angle rate in the current driving state; wherein a steer wheel is a front wheel of the vehicle, a non-steer wheel is a rear wheel of the vehicle, and the reference value of the yaw angle rate is calculated by the following equation:
${r}_{ref} = δ ⋅ \frac{u}{l ⋅ \left(1+K⋅{u}^{2}\right)}$
$K = \frac{m}{{l}^{2}} ⋅ \left(\frac{b}{{C}_{f}}-\frac{a}{{C}_{r}}\right)$
Where *r_{ref}* is the reference value of the yaw angle rate; *δ* is a steering angle of the steer wheel; *u* is a longitudinal velocity of the vehicle; m is a mass of the vehicle; *l* is a wheelbase of the vehicle; *a* and *b* are distances of the front axle and the rear axle to the center of gravity of the vehicle, respectively; *C_{f}* and *Cᵣ* are the cornering stiffness of front and rear wheels of the vehicle, respectively; and *K* is a calculation factor.

According to an embodiment of the present disclosure, wherein the operation of controlling the non-steer wheel of the vehicle in the current driving state includes: applying a braking force to the non-steer wheel of the vehicle based on a reference value of the non-steer wheel cornering stiffness; wherein in response to the reference value of the cornering stiffness of the non-steer wheel is greater than a predetermined reference value, the braking force of the non-steer wheel located on the inner side of the turning path is increased; and in response to the reference value of the cornering stiffness of the non-steer wheel is smaller than the predetermined reference value, the braking force of the non-steer wheel located on the outer side of the turning path is increased.

In accordance with another aspect of the present disclosure, there is provided an apparatus applied to vehicle control, including: a processor; and a memory in which computer instructions are stored, wherein the computer instructions, when executed by the processor, cause the processor to perform the above method applied to vehicle control.

According to yet another aspect of the present disclosure, a computer-readable storage medium is provided, on which computer program instructions are stored. When the computer program instructions are executed by a processor, the processor causes the processor to execute the above method applied to vehicle control.

According to yet another aspect of the present disclosure, there is provided a computer program product comprising computer program instructions which, when executed by a processor, cause the processor to execute the above method applied to vehicle control.

According to yet another aspect of the present disclosure, there is provided a system applied to vehicle control, including: a control means configured to: determine a current driving state of the vehicle, the current driving state being associated with an acceleration operation or a deceleration operation of the vehicle; obtaining a plurality of sample values of a non-steer wheel cornering stiffness of the vehicle in the current driving state; and determining a reference value of the non-steer wheel cornering stiffness corresponding to the current driving state based on the determined plurality of sample values of the non-steer wheel cornering stiffness; and execution means configured to be controlled to execute the operation of the non-steer wheel of the vehicle in the current driving state based on a reference value of the cornering stiffness of the non-steer wheel corresponding to the current driving state.

According to yet another aspect of the present disclosure, there is provided a vehicle having a steer wheel and a non-steer wheel and including the above system applied to vehicle control.

Based on the above, through the method and apparatus of the present disclosure, the dynamic characteristics of the vehicle during driving can be more accurately reflected, thereby providing more precise control parameters for the vehicle's control mechanism. Furthermore, the method and apparatus of the present disclosure are particularly suitable for use in vehicle control systems such as rear wheel steering control systems, which can be made more intelligent and adaptable to cope better with various complex driving situations by using cornering stiffness reference values obtained under different driving conditions for controlling various actuators of the vehicle.

### BRIEF DESCRIPTION OF DRAWINGS

These and/or other aspects and advantages of the present disclosure will become more apparent and more readily appreciated from the following detailed description of the embodiments of the present disclosure, taken in conjunction with the accompanying drawings of which:
FIG. 1 is a schematic diagram illustrating a vehicle coordinate system according to an embodiment of the present disclosure;
FIG. 2 is a schematic diagram illustrating a side slip of wheels when a vehicle turns according to an embodiment of the present disclosure;
FIG. 3 is a schematic diagram showing changes in cornering stiffness of a non-steer wheel under different driving conditions of a vehicle according to an embodiment of the present disclosure;
FIG. 4 is a flowchart illustrating a method applied to vehicle control according to an embodiment of the present disclosure;
FIG. 5 is a schematic diagram illustrating a dynamic model of a vehicle according to an embodiment of the present disclosure;
FIG. 6 is a block diagram illustrating a apparatus applied to vehicle control according to an embodiment of the present disclosure; and
FIG. 7 is a block diagram illustrating a system applied to vehicle control according to an embodiment of the present disclosure.

It should be understood that these drawings are used to provide a further understanding of the embodiments of the present disclosure and constitute a part of the specification. Together with various embodiments of the present disclosure, they are used to explain the technical solutions of the present disclosure and do not constitute a limitation of the present disclosure. Also, in the drawings, like reference numerals generally represent like components or steps.

### DETAILED DESCRIPTION

In order to better explain the technical solutions of the present disclosure, the present disclosure will be further described in detail below in conjunction with the accompanying drawings and specific embodiments. It should be understood that, based on the embodiments described in the present disclosure, all other embodiments obtained by those skilled in the art without creative efforts should fall within the protection scope of the present disclosure, and the embodiments described herein are only They are some embodiments of the present disclosure, not all embodiments of the present disclosure. These embodiments are only illustrative and exemplary, and therefore should not be construed as limiting the scope of the present disclosure.

Firstly, the technical terms and basic principles involved in this disclosure are explained.

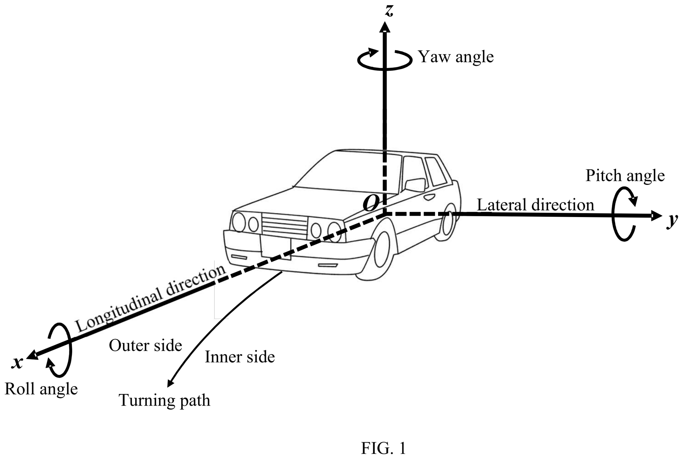

FIG. 1 is a schematic diagram illustrating a vehicle coordinate system according to an embodiment of the present disclosure. As shown in the figure, using the 3DoF (Degrees of Freedom) coordinate system as the vehicle coordinate system, taking the center of mass of the vehicle as the origin O of the coordinate system, and assuming that the vehicle travels on a horizontal road surface, xOy is a plane corresponding to the horizontal road surface, the x-axis points to the forward direction of the vehicle, the y-axis points to the left side of the vehicle, the z-axis is perpendicular to the horizontal road surface on which the vehicle travels, the angles of rotation around the x, y, and z-axes are roll, pitch, and yaw angles respectively, wherein the angles at which the vehicle body rotates when turning corresponds to the yaw angle, and the velocity components of the vehicle on the x-axis is the longitudinal velocity, whose corresponding direction is the longitudinal direction, and the velocity components on the y-axis are the lateral velocity, whose corresponding direction is the lateral direction, and the radius corresponding to the curved path (i.e., turning path) when turning is the turning radius.

Generally, the driver can change the direction of the wheels by operating the steering wheel (a wheel-shaped device used by the driver to steer the driving direction in the cockpit) to achieve the turning of the vehicle. In the present disclosure, the wheel(s) that is rigidly connected directly to the steering system (including components such as the steering wheel, steering gears, tie rods, etc.) to change direction as the steering wheel rotates is referred to as "steer wheel(s)", and the wheel(s) that is not directly connected to the steering system to change direction as the steering wheel rotates is referred to as "non-steer wheel(s)". For example, a "non-steer wheel" may change direction by an electrical signal generated by the steering wheel, rather than directly via a transmission of a mechanical connection to the steering system. Typically, front wheels of a vehicle are designed as the steer wheels, and the rear wheels are designed as the non-steer wheels. In this configuration, when the driver turns the steering wheel (i.e., steering input), the front wheels, as steer wheels, can change their wheel direction directly in response to the driver's steering input, while the rear wheels as non-steer wheels can change their wheel direction indirectly (e.g., via the suspension system) by following the trajectory followed by the front wheels, thereby causing the vehicle to follow a turning path. For illustration but not limitation, the present disclosure will mainly explain the technical solution of the present disclosure as an example of a four-wheeled vehicle with front wheels as steer wheels. It should be understood that the technical solution of the present disclosure can also be adaptively applied to vehicles with rear wheels as steer wheels or other types of vehicles. Herein, "slip," "skewing," and "cornering" have substantially the same meaning, all these referring to an undesired tilting of a wheel, tire, or axle of a vehicle; "turning" and "steering" also have substantially the same meaning, both referring to a change in the direction or orientation of a vehicle (such as by rotation) during travel; and "rate" and "velocity" also have substantially the same meaning, both referring to a physical quantity representing the speed of an object's movement.

Herein, a cornering stiffness of a wheel, such as a front wheel or a rear wheel, may refer to the cornering stiffness of an axle or a tire. As mentioned above, this parameter may be used as a metric of the ability of a wheel to resist side slip (or, skewing, cornering) under the action of lateral forces (or " yawing force"). The cornering stiffness, especially for turning, is one of the important parameters affecting the handling and stability of a vehicle. The cornering stiffness C of the wheel can be simply defined as the ratio of the lateral force F experienced by the wheel to the cornering angle *α,* as follows:
$C = \frac{F}{α}$

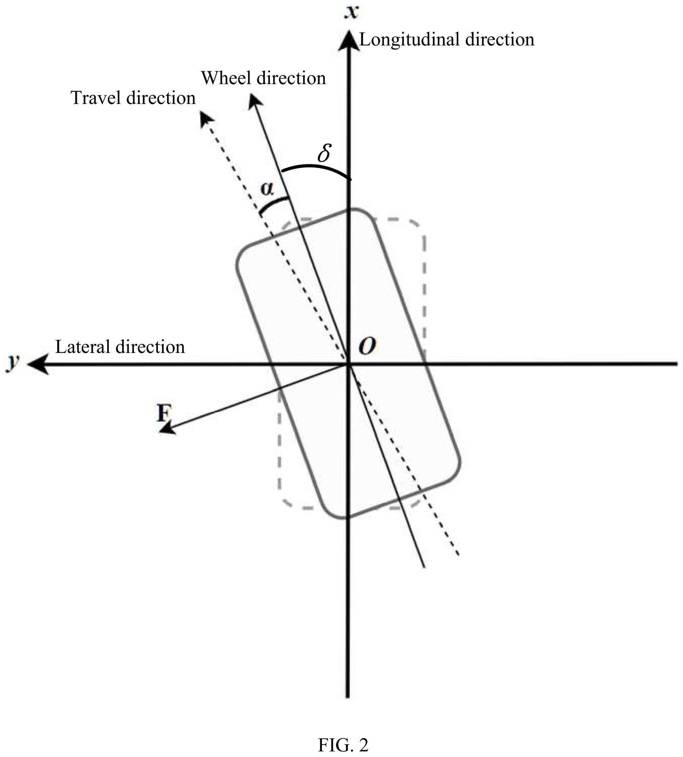

FIG. 2 is a schematic diagram illustrating that wheels are slipped when a vehicle turns according to an embodiment of the present disclosure. As shown, the lateral force F is a force acting on the wheel that is perpendicular to the direction in which the wheel is pointing (i.e., the wheel direction) and directed toward the inner side of the vehicle's turning path. Generally, the lateral force is generated when the vehicle makes lateral movements or turns. For example, in the scenario where the vehicle turns, the steer wheel rotates the yaw angle *δ* (i.e., the steering angle) to turn the vehicle. Due to inertia, the vehicle tends to travel in the original straight direction under the action of centrifugal force. Therefore, in order to achieve the turning of the vehicle, it is necessary to generate a lateral force F opposite to the direction of the centrifugal force on the wheels to resist this inertia, thereby enabling the vehicle to travel along the turning path. When the vehicle turns, since the wheels are not absolutely rigid, the tires will deform, resulting in a difference between the actual direction of travel of the vehicle and the direction of the wheels, and the angle formed by the two directions is the cornering angle α.

According to equation 1 above, the higher the wheel cornering stiffness C, the smaller the cornering angle *α* when the vehicle turns under the action of a given lateral force F, which means that the cornering is smaller; on the contrary, it means that the vehicle has a greater cornering under the action of lateral forces. If the angle *δ* of the wheel direction with the longitudinal direction (corresponding to the steering angle of the steer wheel) is smaller than the angle of the travel direction with the longitudinal direction, the steering radius decreases, corresponding to the situation of understeer of the vehicle; on the contrary, if the steering angle *δ* is greater than the angle of the travel direction with the longitudinal direction, the steering radius increases, corresponding to the situation of oversteer of the vehicle. Therefore, the wheel cornering stiffness is an important parameter for controlling the vehicle and can be applied to various vehicle control systems (such as electronic stability control systems, adaptive cruise control, lane keeping assist, etc.) to improve vehicle stability and handling.

However, since the wheel cornering stiffness of a vehicle is usually determined by the inherent properties of the wheel, such as the aspect ratio of the tire, the material, the texture of the tire, and the stiffness of the wheel axle, existing vehicle control methods tend to adopt a dynamic model having a fixed value of the wheel cornering stiffness without considering the situation that the wheel cornering stiffness may change during actual driving of the vehicle, so that existing vehicle control methods may not accurately predict the dynamic response of the vehicle under different driving conditions, thereby affecting the performance of the vehicle. In addition, the existing vehicle control methods are aimed at calculating and compensating parameters related to the steer wheel, while neglecting the influence of non-steer wheel cornering stiffness on vehicle control. In fact, during the driving process, the non-steer wheel cornering stiffness will change dynamically due to the changing driving conditions, causing the non-steer wheel cornering stiffness to change correspondingly, and then affect the vehicle dynamics.

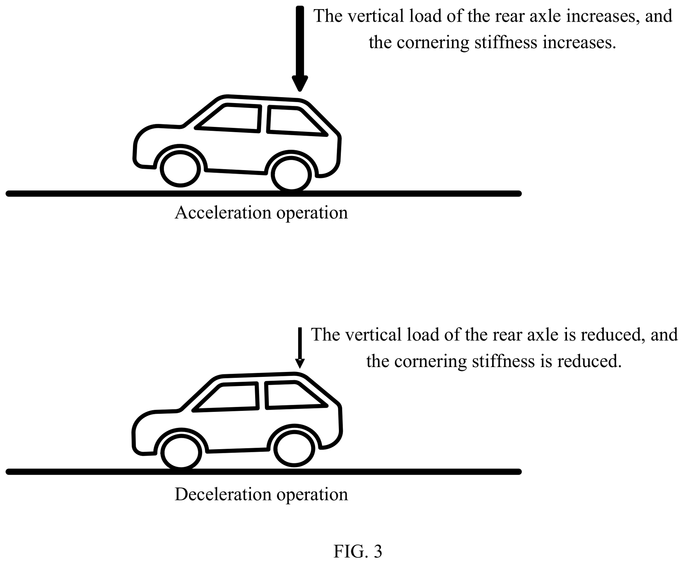

FIG. 3 is a schematic diagram showing changes in non-steer wheel cornering stiffness under different driving conditions of a vehicle according to an embodiment of the present disclosure. As shown, when the driver accelerates the vehicle (for example, steps on the accelerator pedal), due to inertia, the center of gravity of the vehicle shifts to the rear, causing the vertical load on the rear axle to increase, which in turn causes the cornering stiffness of the rear non-steer wheel to increase; when the vehicle is decelerated (for example, stepping on the brake pedal or releasing the accelerator pedal), due to inertia, the center of gravity of the vehicle shifts to the front of the vehicle, which reduces the vertical load on the rear axle, which in turn causes the cornering stiffness of the rear non-steer wheel to decrease. It can be seen that the cornering stiffness of the non-steer wheel may change under different driving conditions due to factors such as load transfer.

In view of this, one of the improvements of the present disclosure resides in obtaining the non-steer wheel cornering stiffness of the vehicle under different driving conditions, thereby being able to more accurately reflect the dynamic characteristics of the vehicle under actual driving conditions, thereby providing the vehicle stability control system with more precise control parameters.

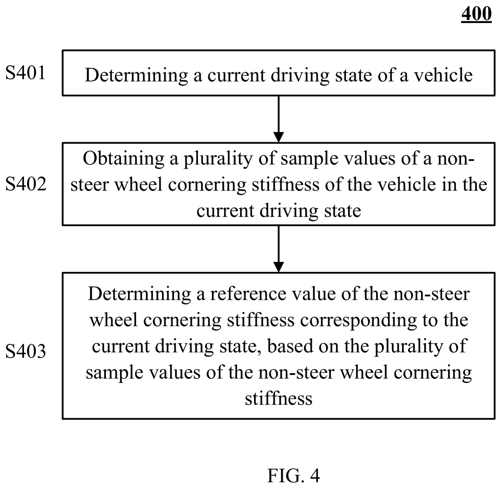

FIG. 4 is a flowchart illustrating a computer-implemented method applied to vehicle control according to an embodiment of the present disclosure. As shown in Figure 4, an example method 400 of the present disclosure may include the following steps:

In step S401, the current driving state of the vehicle is determined.

Specifically, the current driving state may refer to the driving state that the vehicle is currently in, and the current driving state is associated with the acceleration operation or deceleration operation of the vehicle. For example, the acceleration operation may include stepping on the accelerator pedal, and the corresponding driving state (e.g., the first driving state) can be the state of driving or powering the vehicle; and a deceleration operation may comprise depressing a brake pedal or releasing an accelerator pedal, and the corresponding driving state (e.g., the second driving state) may be a state in which the vehicle is braked or coasting.

Additionally, the current driving state of the vehicle may be determined (e.g., through a computing device such as a control means or a processor of a vehicle system or a vehicle) by monitoring (e.g., by sensors) various parameters and operational inputs of the vehicle. According to embodiments of the present disclosure, it may be determined that the vehicle is currently in the first driving state based on the engine torque of the vehicle, and it may be determined that the vehicle is currently in the second driving state based on the main brake cylinder pressure of the vehicle. For example, if the current engine torque is greater than the previous engine torque over a period of time, the current driving state of the vehicle may be determined to be a first driving state associated with an acceleration operation of the vehicle, and when the main brake cylinder pressure is greater than a specific When the pressure value is reached, the current driving state of the vehicle can be determined to be a second driving state associated with a deceleration operation of the vehicle. In addition, in other embodiments, the current driving state of the vehicle can also be determined by detecting changes in acceleration or deceleration pedal positions, vehicle speed, or acceleration, etc.

In step S402, a plurality of sample values of the non-steer wheel cornering stiffness of the vehicle in the current driving state are obtained.

Specifically, in order to obtain the sample value of the non-steer wheel cornering stiffness, various parameters related to the steering of the vehicle can be monitored in real time (e.g., by sensors), such as the lateral speed, lateral acceleration, yaw angle rate, yaw angle acceleration, steering rate, lateral force received by the wheels, etc. of the vehicle, and the instantaneous value of the non-steer wheel cornering stiffness of the vehicle in the current driving state can be determined based on the monitored parameters as the sample value of the non-steer wheel cornering stiffness using a dynamic model of the vehicle, such as a monorail dynamic model or a more complex multi-body dynamic model.

According to an embodiment of the present disclosure, a computing device of a vehicle can first calculate a plurality of instantaneous values of the lateral speed of the vehicle in the current driving state by using a dynamic model of the vehicle, and based on the calculated plurality of instantaneous values of the lateral speed, the computing device can further calculate a plurality of sample values of the non-steer wheel cornering stiffness corresponding to the plurality of lateral speeds. For example, the sample value of the non-steer wheel cornering stiffness can be calculated in a relatively simple manner using a monorail dynamics model to reduce the vehicle to a two-wheel system. This model reduction also facilitates estimating the dynamic response of the vehicle by observing only the change in output due to steering input.

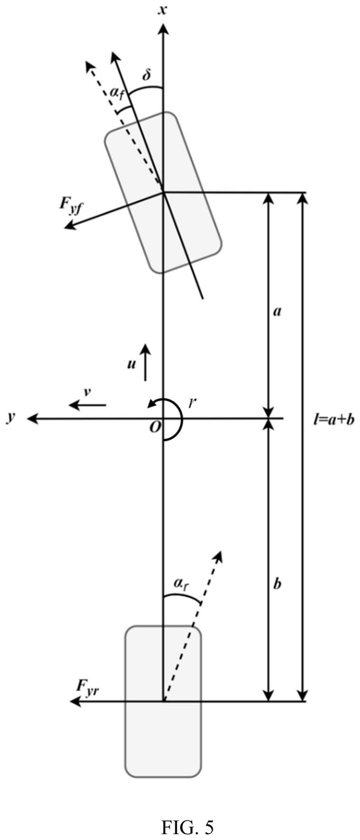

FIG. 5 is a schematic diagram showing a dynamic model of a vehicle according to an embodiment of the present disclosure. Assuming that the steer wheel of the vehicle is the front wheel and the non-steer wheel is the rear wheel, the expression of the corresponding monorail dynamics model is as follows:
$\left[\begin{matrix}\dot{ν} \\ \dot{r}\end{matrix}\right] = \left[\begin{matrix}- \frac{{C}_{f} + {C}_{r}}{mu} & \frac{{bC}_{r} - {aC}_{f}}{{m}_{1} u} - u \\ \frac{{bC}_{r} - {aC}_{f}}{Iu} & - \frac{{a}^{2} {C}_{f} + {b}^{2} {C}_{r}}{Iu}\end{matrix}\right] \left[\begin{matrix}ν \\ r\end{matrix}\right] + \left[\begin{matrix}\frac{{C}_{f}}{m} \\ \frac{{aC}_{f}}{I}\end{matrix}\right] δ$
Where v is the lateral velocity of the vehicle, r is the yaw angle rate of the vehicle (i.e., the yaw angle rate of the vehicle rotating about its center of gravity, in units of rad/s, also known as the yaw angle rate), *v̇* and *ṙ* are derivatives of v and r with respect to time, respectively; u is the longitudinal velocity of the vehicle; *I* is the yaw moment of inertia; *δ* is the steering angle of the front wheels (e.g., steer wheels), m is the mass of the vehicle; *a* and b are the distances of the front and rear axles to the center of gravity of the vehicle, respectively; and *C*_{f} and *C*ᵣ are the cornering stiffness of the front and rear wheels of the vehicle, respectively.

Based on the above dynamic model, the expressions of the cornering stiffness *C_{f}* and *Cᵣ* of the front and rear wheels of the vehicle can be derived as follows:
$\left\{\begin{matrix}{C}_{f} = \frac{{F}_{yf}}{{α}_{f}} = \frac{\left(b\dot{v}m+mbru+I\dot{r}\right) / l}{\left(-v-ra+δu\right) / u} \\ {C}_{r} = \frac{{F}_{yr}}{{α}_{r}} = \frac{\left(maru+ma\dot{v}-I\dot{r}\right) / l}{\left(rb-v\right) / u}\end{matrix}\right.$
Where *l* is the wheelbase of the vehicle, which is equal to the distance from the front axle to the rear axle; *α_{f}* and *αᵣ* are the cornering angles of the front and rear wheels of the vehicle, respectively; and *F_{yf}* and *F_{yr}* are the lateral forces experienced by the front and rear wheels of the vehicle, respectively.

On this basis, the expression of the vehicle's lateral speed v can be further derived from the expression of the front wheel cornering stiffness *C_{f}* as follows:
$ν = δu - ra - \frac{\left(b\dot{ν}m+mbru+I\dot{r}\right) u}{{lC}_{f}}$

The parameters on the right side of the equator in Equation 4 are known or available. For example, parameters such as the mass m and wheelbase *l* of the vehicle can be used as known values using data from the factory configuration of the vehicle, parameters such as the steering angle *δ*, yaw angle rate r and longitudinal velocity u of the front wheels of the vehicle can be obtained by measuring sensors, and the cornering stiffness *C_{f}* and yaw inertia *I* of the front wheels of the vehicle can be obtained by means of test experiments. Here, considering that the front wheel, as the steer wheel, is actively controlled by the driver and the steering of the front wheels can be adjusted by the driver's operation, the lateral velocity v of the vehicle is calculated using the front wheel cornering stiffness *C_{f}* as a known value (for example, experimental data or historical data used) in the above calculation, thereby obtaining a plurality of instantaneous values of the lateral velocity of the vehicle in the current driving state.

Then, the plurality of instantaneous values of the lateral velocity calculated above can be substituted back into the expression of the cornering stiffness of the rear wheel as the non-steer wheel in the above Equation 3 to calculate a sample value of the cornering stiffness of the non-steer wheel corresponding to each lateral velocity, thereby obtaining a plurality of sample values of the cornering stiffness of the non-steer wheel. Therefore, based on Equation 3 and Equation 4, the expression of the sample value *C_{r_sample}* of the rear wheel cornering stiffness can be derived as follows:
${C}_{r _ sample} = \frac{ma \frac{{a}_{y}}{ur} - \frac{I \dot{r}}{ur}}{\frac{{l}^{2}}{{u}^{2}} - \frac{{δ}_{f} l}{ur} + \frac{mb \frac{{a}_{y}}{ur}}{{C}_{f}} + \frac{I \dot{r}}{{urC}_{f}}}$

The above describes an example in which the lateral speed of the vehicle is first calculated using the cornering stiffness of the steer wheel and the sample value of the cornering stiffness of the non-steer wheel is further calculated using the lateral speed, based on a monorail dynamic model which simplifies the vehicle as a two-wheel system, and in the case of a four-wheel vehicle, it can be regarded as consisting of two symmetrical two-wheel systems, so that a corresponding conversion process can be performed to convert the calculated value into data applied to the system of the corresponding vehicle. In other embodiments of the present disclosure, multiple sample values of the non-steer wheel cornering stiffness can also be obtained through other dynamic models or through measurement or detection.

Herein, the process of obtaining sample values is also referred to as "sampling." In an embodiment of the present disclosure, the sampling interval for calculating the non-steer wheel cornering stiffness of the vehicle in the current driving state, that is, the time interval for calculating the sample value of the non-steer wheel cornering stiffness, may be set to periodically calculate a plurality of sample values of the non-steer wheel cornering stiffness over a period of time when the vehicle is in the current driving state. In addition, it is also possible to set a maximum sampling period (i.e., a predetermined time threshold) for sampling the non-steer wheel cornering stiffness, and determine a sampling period for obtaining a plurality of sample values of the non-steer wheel cornering stiffness during the sampling process, and stop sampling of the non-steer wheel cornering stiffness in response to the sampling period reaching the predetermined time threshold, so as to avoid a load on the processing resources of the vehicle with a sampling duration that is too long. For example, it is possible to set the sampling interval to 10 milliseconds and the maximum sampling period to 0.5 seconds (i.e., 500 milliseconds), and then the vehicle will calculate one sample value of the non-steer wheel cornering stiffness of the vehicle every 10 milliseconds until the current driving state changes, or stop sampling after obtaining 50 sample values of the non-steer wheel cornering stiffness within the sampling period of up to 0.5 seconds, the obtained plurality of sample values of the non-steer wheel cornering stiffness corresponding to the dynamic characteristics of the vehicle in the current driving state.

At step S403, a reference value of the non-steer wheel cornering stiffness corresponding to the current driving state is determined based on the calculated plurality of sample values of the non-steer wheel cornering stiffness.

Specifically, it is assumed that, at step S401, the current driving state of the vehicle is determined to be the first driving state associated with the acceleration operation. Then, at step S402, the computing device can obtain the plurality of sample values in the first driving state continuously, and when the current driving state of the vehicle changes from the first driving state to the second driving state associated with the deceleration operation, the acquisition of the plurality of sample values in the first driving state is stopped. Therefore, at step S403, all the sample values of the non-steer wheel cornering stiffness are obtained during the sampling period corresponding to the vehicle being in the first driving state, so that the computing device can determine, based on the obtained sample values, the reference value of the non-steer wheel cornering stiffness corresponding to the first driving state. Similarly, it is assumed that the current driving state of the vehicle is determined to be the second driving state associated with the deceleration operation in the previous step. The reference value of the non-steer wheel cornering stiffness corresponding to the second driving state can be determined at step S403. In this way, the non-steer wheel cornering stiffness of the vehicle can be dynamically determined under different driving conditions of the vehicle to more accurately reflect the dynamic behavior of the vehicle under actual driving conditions, thereby providing more accurate control parameters for the control mechanism of the vehicle, while improving the computing efficiency of the processor and saving the computing resources of the vehicle.

In addition, according to an embodiment of the present disclosure, in response to all the sample values of the non-steer wheel cornering stiffness in the current driving state being obtained, an average value of the non-steer wheel cornering stiffness may be obtained as a reference value of the non-steer wheel cornering stiffness by averaging all the obtained sample values. For example, an arithmetic average of all 50 sample values obtained in one sampling period can be calculated, or the weight of each sample value can be set according to the lateral speed of the vehicle or other parameters of interest to calculate a weighted average of a plurality of sample values, and the calculated average is used as a reference value of the non-steer wheel cornering stiffness specific to the current driving state, and the reference value can be further used as a control parameter for controlling the vehicle in the current driving state.

The above steps describe the basic procedure for dynamically determining the cornering stiffness of the non-steer wheel under different driving conditions of the vehicle.

In addition, according to embodiments of the present disclosure, a step of determining whether the vehicle satisfies the sampling condition may also be added before sampling the non-steer wheel cornering stiffness. That is, before step 402, it is possible to determine whether the vehicle satisfies the sampling condition, and in response to the vehicle satisfying the set specific sampling condition, start sampling of the non-steer wheel cornering stiffness in the current driving state until it is determined that the current driving state changes or does not satisfy the sampling condition.

Specifically, a curve of relastionship between the lateral force applied to the wheel and the cornering angle can be obtained through experiments, and the curve shows that the cornering angle has a linear relationship with the lateral force, when the lateral force is not saturated (for example, the lateral force is less than a predetermined value), as shown in the above equation 1, and the cornering angle has a proportional relationship with the lateral force; when the lateral force increases and reaches saturation (for example, the lateral force is greater than or equal to a predetermined value), the relationship between the cornering angle and the lateral force enters a nonlinear region. For example, when the vehicle is in a state of intense driving, such as rapid acceleration, deceleration, or sharp turning, a large lateral force is generated to reach the saturation value, and the cornering angle is sharply increased by the large lateral force, causing the vehicle to slip or drift after reaching the adhesion limit of the tire. In this case, the calculation of the cornering stiffness will be complicated and inaccurate. Therefore, in order to make the determined reference value of the non-steer wheel cornering stiffness more accurate, a plurality of sample values of the non-steer wheel cornering stiffness obtained when the vehicle is in a smooth traveling state (for example, a state in which the turning speed or acceleration of the vehicle is small, or the turning radius is large) may be selected for use in determining the reference value of the non-steer wheel cornering stiffness is selected. In view of this, a sampling condition may be defined to indicate that the vehicle is in a smooth driving state. For example, the sampling condition may include: a lateral acceleration of the vehicle being within a predetermined range, a yaw angle acceleration being less than a predetermined value, a turning radius being greater than a predetermined value, a steering angle of the steer wheel (or the steering wheel) being less than a predetermined value, and a lateral force of a steer wheel being less than a predetermined value (such as the predetermined value may be set so that the lateral force corresponds to an unsaturated state), or any combination of the above conditions. In embodiments of the present disclosure, the above-mentioned predetermined ranges or predetermined values may be values defined through experiments, tests, or experience, so that the sampling condition based on these predetermined values can indicate that the vehicle is in a smooth driving state. In addition, the existing control mechanism of the vehicle interferes with the dynamic parameters of the vehicle through control intervention, thereby affecting the accuracy of determining the reference value of the non-steer wheel cornering stiffness based on the sample values. In view of this, a sampling condition may be defined to indicate that the vehicle is in a non-control intervention state. For example, the sampling conditions may include: one or more control mechanisms, such as Anti-lock Braking System (ABS), Traction Control System (TCS), or Active Yaw Control system (AYC), not being activated. In this way, one or more of the above sampling condition can be used as a trigger condition for starting sampling, and the sampling can be stopped when the sampling condition is no longer met to ensure that the sample value of the desired non-steer wheel cornering stiffness is obtained, thereby making it possible to improve the accuracy of determining the reference value of the non-steer wheel cornering stiffness while also saving processing resources of the vehicle.

The flow of determining the reference value of the non-steer wheel cornering stiffness in the method applied to the vehicle control has been described in detail above. After determining the reference value of the non-steer wheel cornering stiffness corresponding to the current driving state, the reference value of the non-steer wheel cornering stiffness can be used for controlling the operation of the non-steer wheel of the vehicle in the corresponding driving state. As described above, the reference values of the cornering stiffness of the non-steer wheel corresponding to the current driving state can be determined within the sampling period by the above method, and after the sampling period ends, these reference values can be stored in the control system of the vehicle, so that when the vehicle enters the same driving state again, the stored reference values of the cornering stiffness of the non-steer wheel corresponding to the driving state are used to control the operation of the non-steer wheel of the vehicle in the driving state, thereby enabling the vehicle to dynamically adjust the corresponding actuators in accordance with the driving state to ensure the drivability and stability of driving of the vehicle. For example, after determining the reference value of the non-steer wheel cornering stiffness corresponding to the first driving state, the reference value of the non-steer wheel cornering stiffness will be used to control the operation of the vehicle in the current first driving state when the vehicle enters the first driving state again.

According to an embodiment of the present disclosure, the reference value of the yaw angle rate corresponding to the current driving state, i.e., the reference value of the yaw angle rate of the vehicle in the current driving state, can be calculated based on the reference value of the non-steer wheel cornering stiffness determined according to the above-described method; and controlling the non-steer wheel of the vehicle to track the calculated reference value of the yaw angle rate in the current driving state. In particular, the vehicle may control the actuator(s) for the non-steer wheel to operate accordingly, so that the non-steer wheel approaches and reaches the reference value of the yaw angle rate. For example, the difference between the actual value and the reference value of the yaw angle rate of the non-steer wheel can be determined, and the non-steering wheel can track the reference value of the yaw angle rate by compensating or adjusting the control parameters of the corresponding actuator(s) based on the difference. Also, assuming that a steer wheel is a front wheel of the vehicle and a non-steer wheel is a rear wheel of the vehicle, the reference value *r_{ref}* of the yaw angle rate can be calculated by the following equation:
${r}_{ref} = δ ⋅ \frac{u}{l ⋅ \left(1+K⋅{u}^{2}\right)}$
$K = \frac{m}{{l}^{2}} ⋅ \left(\frac{b}{{C}_{f}}-\frac{a}{{C}_{r _ ref}}\right)$
Wherein K is a factor for calculating the reference value *r_{ref}* of the yaw angle rate of the vehicle. The factor K can describe the stability state of the vehicle or may be referred to as the "stability factor," and is determined by at least the reference value of the non-steer wheel cornering stiffness *C_{r_ref},* so that the calculated reference value *r_{ref}* of the yaw angle rate can also reflect the dynamic characteristics of the vehicle under actual driving conditions. Accordingly, the control of the vehicle is dynamically performed based on the vehicle being in different driving states, such that the operation response of the non-steering wheel is more accurate.

In addition, according to embodiments of the present disclosure, the braking force can also be applied to the non-steering wheel of the vehicle, based on the reference value of the non-steer wheel cornering stiffness, to facilitate the stability and cornering performance of the vehicle. Specifically, the cornering stiffness of the non-steer wheel of the vehicle can affect the turning response of the vehicle. For example, if the reference value of the cornering stiffness of the non-steer wheel is large, in this case, the vehicle may tend to understeer, namely, the actual turning radius of the vehicle is greater than the intended turning radius, causing the vehicle to slip outwards out of the curve; on the contrary, if the reference value of the cornering stiffness of the non-steer wheel is small, in this case, the vehicle may tend to oversteer, namely, the actual turning radius of the vehicle is smaller than the intended turning radius, causing the vehicle to slip inward out of the curve. Therefore, in an embodiment of the present disclosure, it is possible to set a predetermined reference value, and in response to the reference value of the cornering stiffness of the non-steer wheel determined according to the above method is greater than the predetermined reference value, the braking force of the non-steer wheel located on the inner side of the turning path is correspondingly increased to promote the turning of the vehicle; and in response to the reference value of the cornering stiffness of the non-steer wheel is smaller than the predetermined reference value, the braking force of the non-steer wheel located on the outer side of the turning path is correspondingly increased to restrain the turning of the vehicle. It can be seen that the above braking operation can help the vehicle to better travel along the expected turning path, so as to avoid potential understeering and oversteering. In this embodiment, for example, the above-mentioned predetermined reference value can be dynamically set according to the actual yaw angle rate of the vehicle, so that the braking force can be applied more accurately for different turning scenarios to improve the turning performance of the vehicle.

In addition, according to embodiments of the present disclosure, based on the reference value of the non-steer wheel cornering stiffness, the stiffness of the suspension system can also be dynamically adjusted to change the load distribution of the vehicle, thereby compensating for changes in the cornering stiffness of the vehicle due to load transfer.

It can be seen that the vehicle control method of the present disclosure can improve the dynamic response of the vehicle by implementing precise control of the non-steer wheel under the current driving state. Therefore, the vehicle control method of the present disclosure can be applied to systems such as rear wheel steering control systems, electronic stability control systems, adaptive cruise control, lane keep assist, etc., to significantly improve the drivability and stability of the vehicle. On the other hand, considering that the steer wheel is directly connected to the steering system of the vehicle, the driver can actively adjust and compensate for the operation of the steer wheel according to the driving state. Therefore, the control method for the non-steer wheel of the present disclosure can further improve the stability of the vehicle, and the control intervention for the non-steer wheel will not affect the driver's operating feel.

Next, an apparatus applied to vehicle control according to an embodiment of the present disclosure is described.

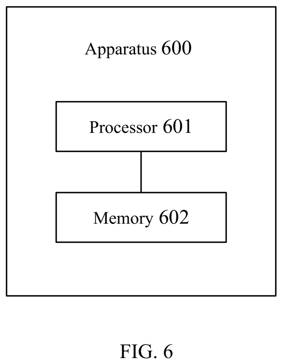

FIG. 6 is a block diagram illustrating an apparatus applied to vehicle control according to an embodiment of the present disclosure. As shown in FIG. 6, an apparatus 600 applied to vehicle control includes a processor 601 and a memory 602. The apparatus 600 may be integrated into a computing device in the vehicle, or part of the apparatus 600 may be deployed on a remote server or cloud. Since specific details of operations performed by the apparatus 600 according to an embodiment of the present disclosure are substantially the same as the method 400 applied to vehicle control described above, partial descriptions of the same details are omitted herein for brevity.

The processor 601, which may be a central processing unit (CPU), micro control unit (MCU), digital signal processor (DSP), or other form of processing unit with data processing capabilities and/or instruction execution capabilities, receives inputs from various sensors, such as steering angle sensors, lateral acceleration sensors, etc., and may utilize computer program instructions stored in the memory 602 to perform desired functions, wherein the computer program instructions, when executed by the processor 601, cause the apparatus 600 to perform the method 400 applied to vehicle control described in connection with Figures 1-5 above, e.g., may perform the following operations: determining a current driving state of the vehicle, the current driving state being associated with an acceleration or deceleration operation of the vehicle; obtaining a plurality of sample values of a non-steer wheel cornering stiffness of the vehicle in the current driving state; and determining a reference value of the non-steer wheel cornering stiffness corresponding to the current driving state based on the determined plurality of sample values of the non-steer wheel cornering stiffness.

Memory 602 may include one or more computer program products, which may include various forms of computer-readable storage media, such as volatile memory and/or non-volatile memory. One or more computer program instructions may be stored on a computer-readable storage medium, so that the processor 601 may run the program instructions to implement the above functions of the above-described embodiments and/or other desired functions, and/or may execute the above methods according to embodiments of the present disclosure. Various application programs and various data can also be stored in the computer-readable storage medium.

According to an embodiment of the present disclosure, when the computer program instructions are executed by the processor 601, the apparatus 600 is caused to further perform the following operations: determining whether the vehicle satisfies a sampling condition; and in response to the vehicle satisfying the sampling condition, obtaining a plurality of sample values of a non-steer wheel cornering stiffness of the vehicle in the current driving state until the vehicle does not satisfy the sampling condition; wherein the sampling condition indicates that the vehicle is in a smooth driving state, the sampling condition comprising: a lateral acceleration of the vehicle being within a predetermined range, a yaw angle acceleration being less than a predetermined value, a turning radius being greater than a predetermined value, a steering angle of a steering wheel or a steer wheel being less than a predetermined value, a lateral force of a steer wheel being less than a predetermined value, or any combination thereof; and/or the sampling condition indicates that vehicle being in a non-control intervention state, the sampling condition comprising one or more of an anti-lock braking system, a traction control system and an active yaw control system not being activated.

According to an embodiment of the present disclosure, the computer program instructions, when executed by the processor 601, cause the apparatus 600 to further perform the following operations: control the operation of the non-steer wheel(s) of the vehicle in the current driving state based on the reference value of the non-steer wheel cornering stiffness corresponding to the current driving state; wherein the operation of controlling the non-steer wheel of the vehicle in the current driving state includes: calculating a reference value of a yaw angle rate corresponding to the current driving state based on a reference value of a cornering stiffness of the non-steer wheel; and controlling the operation of the non-steer wheel of the vehicle in the current driving state based on the calculated reference value of the yaw angle rate; or comprising: applying a braking force to the non-steer wheel of the vehicle based on the reference value of the non-steer wheel cornering stiffness; wherein in response to the reference value of the cornering stiffness of the non-steer wheel being greater than a predetermined reference value, the braking force of the non-steer wheel located on the inner side of the turning path is increased; and in response to the reference value of the cornering stiffness of the non-steer wheel being smaller than the predetermined reference value, the braking force of the non-steer wheel located on the outer side of the turning path is increased.

In addition, the structure shown in the figure is only exemplary and not restrictive, and in addition to the components shown in the figure, the apparatus 600 may also include other components, which, however, are not highly relevant to the embodiments of the present disclosure, so the illustration and description for those components are omitted herein.

In addition, the apparatus 600 applied to vehicle control may also be configured as components or modules that perform corresponding operations. For example, the apparatus 600 may include means for determining a current driving state of the vehicle, means for obtaining a plurality of sample values of a non-steer wheel cornering stiffness of the vehicle in the current driving state, and means for determining a reference value of the non-steer wheel cornering stiffness corresponding to the current driving state. These means may be integrated into a single element to perform the operations, or may function as discrete elements to perform the respecitve operations.

In addition, the present disclosure also provides a computer-readable storage medium on which computer program instructions are stored, wherein when the computer program instructions are executed by a processor, the steps performed by the processor described above are implemented, which is consistent with the corresponding contents of each embodiment described above. In addition, it should be understood that each component or module in the above apparatus/device can be implemented by hardware or software, and can also be implemented by a combination of hardware and software.

Next, a system applied to vehicle control according to an embodiment of the present disclosure is described.

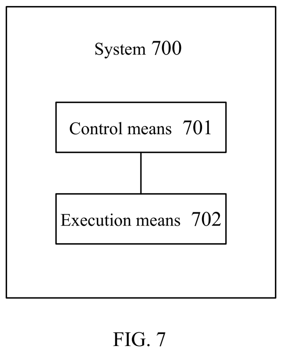

FIG. 7 is a block diagram illustrating a system applied to vehicle control according to an embodiment of the present disclosure. As shown in FIG. 7, a system 700 applied to vehicle control includes a control means 701 and an execution means 702. The control means 701 may be configured to perform the operation of determining the reference value of the non-steer wheel cornering stiffness in the method 400 applied to vehicle control described in conjunction with FIGS. 1-5 above, and the control means 701 may communicate with the execution means 702 to control the execution means 702 to perform corresponding operations on the non-steer wheel of the vehicle. For example, the control means 701 may be configured to: determine the current driving state of the vehicle, where the current driving state is associated with the acceleration operation or deceleration operation of the vehicle; obtaining a plurality of sample values of a non-steer wheel cornering stiffness of the vehicle in the current driving state; and determining a reference value of the non-steer wheel cornering stiffness corresponding to the current driving state based on the determined plurality of sample values of the non-steer wheel cornering stiffness. The executing means 702 may be configured to be controlled to execute the operation of the non-steer wheel of the vehicle in the current driving state based on the reference value of the cornering stiffness of the non-steer wheel corresponding to the current driving state. This operation may include the above-described operations, such as causing the non-steer wheel to track the reference value of the yaw angle rate or applying braking force to the non-steer wheel.

According to embodiments of the present disclosure, the control means 701 may be implemented as any device or module equipped with computing and control functions, such as an on-board computing platform, such as Advanced Driver Assistance System (ADAS) Adaptive Cruise Control (ACC), Lane Keeping Assistance (LKA), etc., or may be the apparatus 600 described above or a part thereof (such as the processor 601), and it may receive inputs from various sensors, such as steering angle sensors, lateral acceleration sensors, etc., and generate and send control instructions based on these inputs; and the actuating means 702 may be implemented as a suspension system of the vehicle, an electronic stability system, a steering actuator, or any means that can be used to receive commands from a control means and convert them into physical actions.

In addition, the present disclosure also provides a vehicle having a steer wheel and a non-steer wheel and including the above-mentioned system 700 applied to vehicle control. Examples of vehicles may be gasoline vehicles, electric vehicles, hybrid vehicles, etc.. The vehicles may be two-wheeled vehicles, four-wheeled vehicles, or have a greater number of wheels, and as mentioned above, the front wheels of vehicles may be designed as steer wheels or non-steer wheels.

The method, apparatus, and system for vehicle control according to the embodiment of the present disclosure have been fully described above with reference to the accompanying drawings. Through aspects and embodiments of the present disclosure, an improved vehicle control technology is provided, which can more accurately reflect the dynamic characteristics of the vehicle under actual driving conditions, provide more precise control parameters for the vehicle's control mechanism, thereby significantly improving vehicle handling and stability.

In addition, the basic principles of the present disclosure have been described above in conjunction with specific embodiments. However, it should be pointed out that the advantages, effects, etc. mentioned in the embodiments of the present disclosure are only examples and not limitations, and these advantages, etc. cannot be considered. Advantages, effects, etc., are necessary for each embodiment of the present disclosure. In addition, the specific details disclosed above are for the purpose of example and understanding only, and are not limiting, and the above details do not limit the present disclosure to the specific details that must be used to practice the present disclosure.

The block diagrams of the devices, apparatus, equipment, and systems involved in the embodiments of the present disclosure are only illustrative examples and are not intended to require or imply that they must be connected, arranged, or configured in the manner shown in the block diagrams. As those skilled in the art will recognize, these devices, apparatus, equipment, systems may be connected, arranged, configured in any manner. Words such as "comprises," "include," "have," and the like are open-ended words that mean "including, but not limited to," and may be used interchangeably therewith. As used herein, the words "or" and "and" mean, and are used interchangeably with, the word "and/or" unless context clearly indicates otherwise. As used herein, the word "such as" refers to, and is used interchangeably with, the phrase "such as, but not limited to."

Also, as used herein, "or" as used in a list of items prefaced by "at least one of indicates a disjunctive list such that, for example, a list of" at least one of A, B, or C "means A or B or C or AB or AC or BC or ABC (i.e., A and B and C). Furthermore, the term "exemplary" does not imply that the described example is preferred or advantageous over other examples.

It should also be pointed out that in the equipment and method of the present disclosure, each component or each step can be decomposed and/or recombined. These decompositions and/or recombinations should be considered equivalents of the present disclosure.

Those of ordinary skill in the art can understand that all or any part of the methods and devices of the present disclosure can be implemented in hardware, firmware, software, or a combination thereof in any computing device (including processors, storage media, etc.) or a network of computing devices. The hardware can be with a general-purpose processor, a digital signal processor (DSP), an ASIC, a field programmable gate array (FPGA), or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Software may reside in any form of computer-readable tangible storage medium. By way of example, and not limitation, such computer-readable tangible storage media can comprise RAM, ROM, EEPROM, CD-ROM or other optical disk storage, magnetic disk storage or other magnetic storage devices, or any other tangible medium that can be used to carry or store desired program code in the form of instructions or data structures and that can be accessed by a computer. Disk, as used herein, includes compact disc (CD), laser disc, optical disc, digital versatile disc (DVD), floppy disk, and Blu-ray disc.

The previous description of the disclosed aspects is provided to enable any person skilled in the art to make or use the present disclosure. Various modifications to these aspects will be readily apparent to those skilled in the art, and the generic principles defined herein may be applied to other aspects without departing from the scope of the disclosure. Thus, the present disclosure is not intended to be limited to the aspects shown herein but is to be accorded the widest scope consistent with the principles and novel features disclosed herein.

The foregoing description has been presented for the purposes of illustration and description. Furthermore, this description is not intended to limit the embodiments of the present disclosure to the form disclosed herein. While a number of example aspects and embodiments have been discussed above, those of skill in the art will recognize certain variations, modifications, additions, and sub-combinations thereof.

## Claims

1. A computer-implemented method (400) applied to vehicle control, comprising:
determining a current driving state of a vehicle, the current driving state being associated with an acceleration operation or deceleration operation of the vehicle (S401);
obtaining a plurality of sample values of a non-steer wheel cornering stiffness of the vehicle in the current driving state (S402); and
determining a reference value of the non-steer wheel cornering stiffness corresponding to the current driving state, based on the plurality of sample values of the non-steer wheel cornering stiffness (S403).

2. The method of claim 1, further comprising:
determining whether the vehicle satisfies a sampling condition; and
obtaining, in response to the vehicle satisfying the sampling condition, the plurality of sample values of the non-steer wheel cornering stiffness of the vehicle in the current driving state, until determining that the vehicle does not satisfy the sampling condition.

3. The method of claim 1 or 2, wherein
the sampling condition indicates that the vehicle is in a smooth traveling state, the sampling condition comprising a lateral acceleration of the vehicle being within a predetermined range, a yaw angle acceleration being less than a predetermined value, a turning radius being greater than a predetermined value, a steering angle of a steer wheel being less than a predetermined value, and a lateral force of a steer wheel being less than a predetermined value; and/or
the sampling condition indicates that the vehicle being in a non-control intervention state, the sampling condition comprising one or more of an anti-lock braking system, a traction control system and an active yaw control system not being activated.

4. The method of any one of claims 1 to 3, further comprising:
determining a sampling period for obtaining the plurality of sample values of the non-steer wheel cornering stiffness; and
ceasing to obtain the plurality of sample values of the non-steer wheel cornering stiffness, in response to the sampling period reaching a predetermined time threshold.

5. The method according to any one of claims 1 to 4, wherein the determining the current driving state of the vehicle comprises:
determining, based on an engine torque of the vehicle, whether the current driving state is a first driving state associated with an acceleration operation of the vehicle, the acceleration operation including stepping on an accelerator pedal; and
determining, based on a main brake cylinder pressure of the vehicle, whether the current driving state is a second driving state associated with a deceleration operation of the vehicle, the deceleration operation including stepping a brake pedal or releasing the accelerator pedal.

6. The method according to any one of claims 1 to 5, wherein the obtaining the plurality of sample values of the non-steer wheel cornering stiffness of the vehicle in the current driving state comprises:
calculating a plurality of instantaneous values of the lateral velocity of the vehicle in the current driving state, based on a dynamic model of the vehicle; and
calculating the plurality of sample values of the non-steer wheel cornering stiffness corresponding to a plurality of lateral velocities, based on the plurality of instantaneous values of the lateral velocity.

7. The method of claim 6, wherein the steer wheel is the front wheel of the vehicle and the non-steer wheel is the rear wheel of the vehicle, and the dynamic model is expressed as follows: $\left[\begin{matrix}\dot{ν} \\ \dot{r}\end{matrix}\right] = \left[\begin{matrix}- \frac{{C}_{f} + {C}_{r}}{mu} & \frac{{bC}_{r} - {aC}_{f}}{{m}_{1} u} - u \\ \frac{{bC}_{r} - {aC}_{f}}{Iu} & - \frac{{a}^{2} {C}_{f} + {b}^{2} {C}_{r}}{Iu}\end{matrix}\right] \left[\begin{matrix}ν \\ r\end{matrix}\right] + \left[\begin{matrix}\frac{{C}_{f}}{m} \\ \frac{{aC}_{f}}{I}\end{matrix}\right] δ$
where *v* is the lateral velocity of the vehicle, r is the yaw angle rate of the vehicle, *v̇* and *ṙ* are derivatives of *v* and *r* with respect to time, u is the longitudinal velocity of the vehicle, *I* is the yaw moment of inertia, *δ* is the steering angle of the steer wheel, *m* is the mass of the vehicle, *a* and *b* are the distances of the front and rear axles to the center of gravity of the vehicle, and *C*_{f} and *C*ᵣ are the cornering stiffness of the front and rear wheels of the vehicle, respectively; and
the calculating the plurality of sample values of the non-steer wheel cornering stiffness comprises:
calculating a plurality of instantaneous values of the lateral velocity using a front wheel cornering stiffness; and
calculating a sample value of the non-steer wheel cornering stiffness corresponding to each of a plurality of lateral velocities, using the plurality of instantaneous values of the lateral velocity.

8. The method according to any one of claims 1 to 7, wherein the determining the reference value of the non-steer wheel cornering stiffness corresponding to the current driving state comprises:
averaging, in response to all the sample values of the non-steer wheel cornering stiffness in the current driving condition being obtained, all the obtained sample values, to obtain an average value of the non-steer wheel cornering stiffness; and
determining the average value of the non-steer wheel cornering stiffness as the reference value of the non-steer wheel cornering stiffness.

9. The method of any one of claims 1 to 8, further comprising:
controlling an operation of the non-steer wheel of the vehicle in the current driving state, based on the reference value of the non-steer wheel cornering stiffness corresponding to the current driving state.

10. The method according to claim 9, wherein the controlling the operation of the non-steer wheel of the vehicle in the current driving state comprises:
calculating a reference value of a yaw angle rate corresponding to the current driving state, based on the reference value of the non-steer wheel cornering stiffness; and
controlling the non-steer wheel of the vehicle to track the reference value of the yaw angle rate in the current driving state,
wherein a steer wheel is a front wheel of the vehicle, the non-steer wheel is a rear wheel of the vehicle, and the reference value of the yaw angle rate is calculated by the following equation: $\begin{matrix}{r}_{ref} = δ ⋅ \frac{u}{l ⋅ \left(1+K⋅{u}^{2}\right)} \\ K = \frac{m}{{l}^{2}} ⋅ \left(\frac{b}{{C}_{f}}-\frac{a}{{C}_{r}}\right)\end{matrix}$ where *r_{ref}* is the reference value of the yaw angle rate, *δ* is a steering angle of the steer wheel, *u* is a longitudinal velocity of the vehicle, *m* is a mass of the vehicle, *l* is a wheelbase of the vehicle, *a* and b are distances of a front axle and a rear axle of the vehicle to a center of gravity, respectively, *C_{f}* and *Cᵣ* are cornering stiffness of front and rear wheels of the vehicle, respectively, and *K* is a calculation factor.

11. The method according to claim 9 or 10, wherein the controlling the operation of the non-steer wheel of the vehicle in the current driving state comprises:
applying a braking force to the non-steer wheel of the vehicle based on the reference value of the non-steer wheel cornering stiffness; wherein
the braking force of the non-steer wheel located on the inner side of the turning path, in response to the reference value of the cornering stiffness of the non-steer wheel being greater than a predetermined reference value, is increased; and
the braking force of the non-steer wheel located on the outer side of the turning path, in response to the reference value of the cornering stiffness of the non-steer wheel being smaller than the predetermined reference value, is increased.

12. An apparatus (600) applied to vehicle control, comprising:
a processor (601); and
a memory (602) storing computer instructions therein, wherein the computer instructions, when executed by the processor, cause the processor to perform the method applied to vehicle control according to any one of claims 1-11.

13. A computer program product comprising computer program instructions which, when executed by a processor, cause the processor to perform the method applied to vehicle control according to any one of claims 1-11.

14. A system (700) for vehicle control, comprising:
a control means (701) configured to:
determining a current driving state of a vehicle, the current driving state being associated with an acceleration operation or deceleration operation of the vehicle;
obtaining a plurality of sample values of a non-steer wheel cornering stiffness of the vehicle in the current driving state; and
determining a reference value of the non-steer wheel cornering stiffness corresponding to the current driving state based on the plurality of sample values of the non-steer wheel cornering stiffness; and
executing means (702) configured to be controlled to execute an operation of the non-steer wheel of the vehicle in the current driving state, based on the reference value of cornering stiffness of the non-steer wheel corresponding to the current driving state.

15. A vehicle having a steer wheel and a non-steer wheel and comprising a system applied to vehicle control according to claim 14.
